# DEMANDE DE BREVET EUROPEEN

(11) **EP 1 844 974 A1**
(43) Date de publication de la demande: **17.10.2007**
(21) Numéro de dépôt: 06300349.5
(22) Date de dépôt: 11.04.2006
(51) Int. Cl.: B60N 2/06, B60N 2/12

(54) **Mécanisme de guidage d'un siège et véhicule automobile correspondant**

(71) Demandeur: PEUGEOT CITROËN AUTOMOBILES S.A., 78140 Velizy Villacoublay (FR)
(72) Inventeur: Combeau, Frédéric, 25750, Desandans (FR)

(57) **Abrégé**

Ce mécanisme de guidage d'un siège pour véhicule automobile comprend une coulisse (8) destinée à être fixée à la structure du véhicule (6), un coulisseau (10) destiné à être fixé au siège (4) et mobile en coulissement par rapport à la coulisse (8) entre une position avant du siège et une position arrière du siège, et des moyens de rappel (12) du coulisseau (10) par rapport à la coulisse (8). Les moyens de rappel (12) sont adaptés pour solliciter le coulisseau (10) vers la position arrière du siège, lorsque le coulisseau (10) se trouve entre les positions avant et arrière du siège.

Application aux sièges situés derrière les sièges avant d'un véhicule automobile.

## Description

La présente invention concerne un mécanisme de guidage d'un siège pour véhicule automobile, du type comprenant
- une coulisse destinée à être fixée à la structure du véhicule,
- un coulisseau destiné à être fixé au siège et mobile en coulissement par rapport à la coulisse entre une position avant du siège et une position arrière du siège,
- des moyens de rappel du coulisseau par rapport à la coulisse.

Elle s'applique notamment aux véhicules automobiles « monospace » munis de trois rangées de sièges.

On connaît par le document FR-A-2 746 063 un dispositif permettant de faciliter le déplacement d'un siège de véhicule automobile vers l'avant ce celui-ci, afin de faciliter l'accès à des sièges situés en arrière du siège muni du dispositif.

Toutefois, la manipulation lors d'un déplacement afin de régler la position de ce siège est difficile.

L'invention a pour but de proposer un mécanisme qui permette la fabrication d'un siège ayant une meilleure ergonomie importante.

A cet effet, l'invention a pour objet un mécanisme du type précité, caractérisé en ce que les moyens de rappel sont adaptés pour solliciter le coulisseau vers la position arrière du siège, lorsque le coulisseau se trouve entre les positions avant et arrière du siège.

Selon des modes particuliers de réalisation du mécanisme selon l'invention, celui-ci comporte l'une ou plusieurs des caractéristiques suivantes :
- le coulisseau est mobile en coulissement entre la position avant du siège et une position d'accès à des places arrières du siège, la position avant étant située entre la position d'accès et la position arrière, et le mécanisme comprend des moyens d'inhibition adaptés pour inhiber les moyens de rappel exclusivement lorsque le coulisseau se trouve entre la position avant et la position d'accès ;
- les moyens d'inhibition sont adaptés pour inhiber les moyens de rappel de manière automatique lorsque le coulisseau franchit la position avant vers la position d'accès ;
- les moyens d'inhibition comprennent des moyens adaptés pour faire cesser l'inhibition de manière automatique lorsque le coulisseau franchit la position avant vers la position arrière ;
- les moyens d'inhibition comprennent des moyens de libération adaptés pour libérer les moyens de rappel de la coulisse ou du coulisseau ;
- les moyens de rappel comprennent un organe élastique, notamment un câble élastique ;
- l'organe élastique comprend une première extrémité, fixée à demeure par rapport à la coulisse, et une seconde extrémité reliée au coulisseau par l'intermédiaire des moyens de libération ;
- le mécanisme comprend des moyens de maintien adaptés pour maintenir les moyens de rappel dans une configuration qui correspond à leur configuration de la position avant du coulisseau, lorsque le coulisseau se trouve entre la position avant et la position d'accès ; et
- les moyens de maintien comprennent un crochet de retenue disposé sur l'un des éléments coulisseau ou moyen de rappel et un évidement correspondant disposé sur l'autre des éléments coulisseau ou moyens de rappel.

L'invention a en outre pour objet un véhicule automobile, du type comprenant au moins un siège mobile entre une position avant et une position arrière, caractérisé en ce que le siège est relié à la structure du véhicule au moyen d'un mécanisme tel que décrit ci-dessus.

L'invention sera mieux comprise à la lecture de la description qui va suivre, donnée uniquement à titre d'exemple et faite en se référant aux dessins annexés, sur lesquels :
- les Figures 1, 3 et 5 sont des vues en perspective d'un mécanisme selon l'invention, respectivement correspondant à une position arrière, une position avant, et une position d'accès ;
- la Figure 2 est un détail agrandi de la Figure 1, partiellement arraché ;
- la Figure 4 montre une vue, partiellement arrachée, du mécanisme de la Figure 3;

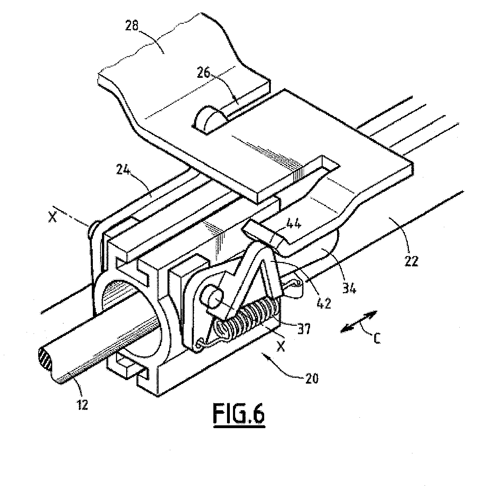

- la Figure 6 est le détail VI agrandi de la Figure 2 ; et
- la Figure 7 montre des éléments constitutifs du mécanisme, dans leur position correspondant à la Figure 4.

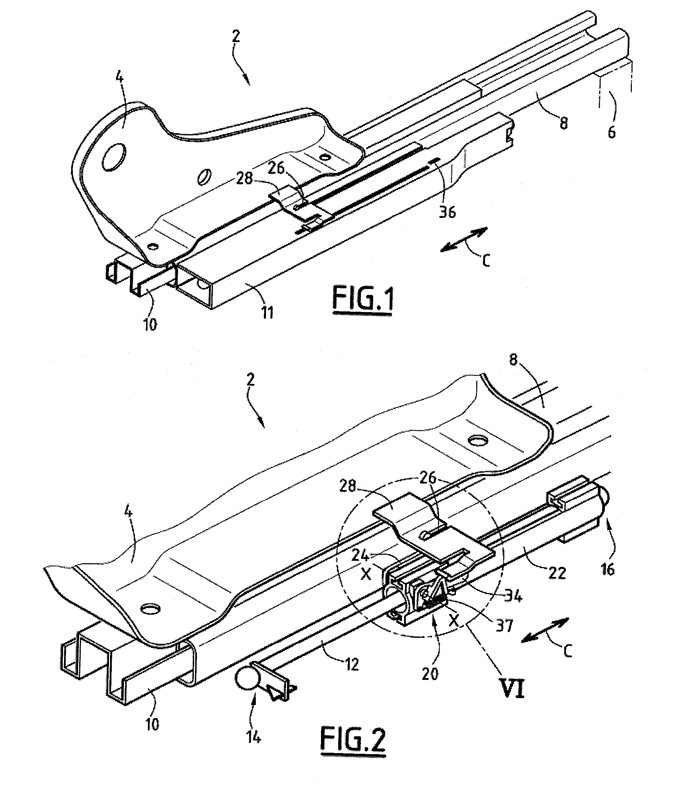

Sur la Figure 1 est représenté en perspective un mécanisme de guidage d'un siège pour véhicule automobile, désigné par référence générale 2.

Le mécanisme 2 est destiné à relier un siège 4 représenté de manière schématique par une équerre à la structure 6 d'un véhicule automobile, tel qu'un châssis. Il est particulièrement adapté pour être utilisé dans des véhicules couramment appelés « monospace » qui comprennent trois rangées de sièges disposées les unes derrières les autres dans le sens de déplacement de la voiture. Dans ce cas, le mécanisme 2 relie les sièges de la rangée du milieu à la structure du véhicule, afin de permettre l'accès aux sièges de la rangée arrière.

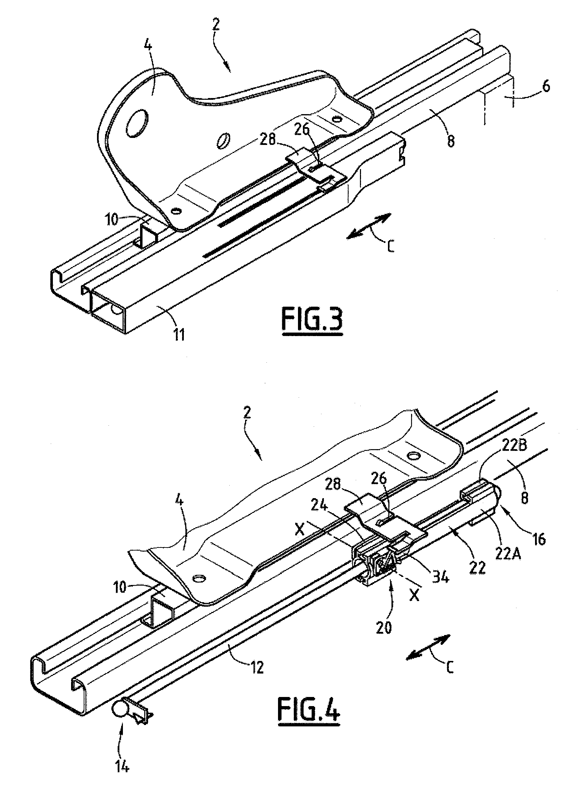

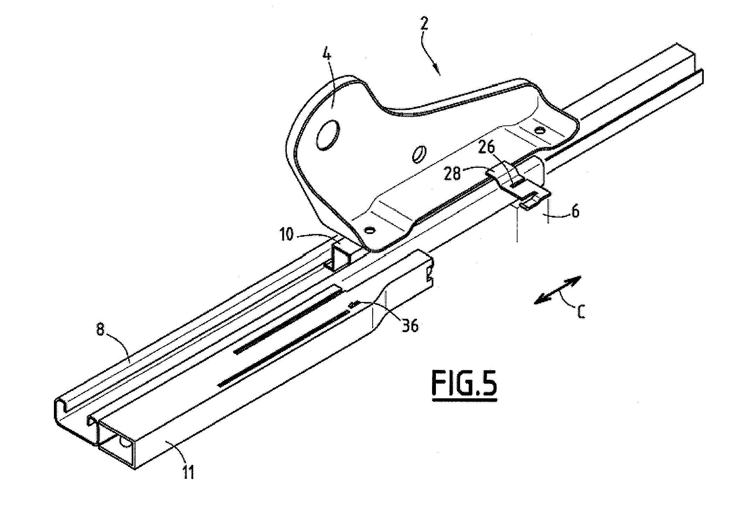

Le mécanisme 2 est muni d'une coulisse 8, qui est fixée à la structure 6 du véhicule, et d'un coulisseau 10 auquel est fixé le siège 4. Ce coulisseau 10 est mobile en coulissement suivant une direction de coulissement rectiligne C dans la coulisse 8 entre une position arrière du siège (Figures 1 et 2), une position avant du siège (Figures 3 et 4), et une position d'accès à des places arrières du siège (Figure 5).

Comme il ressort des Figures 1, 3 et 5, la position avant est située entre la position d'accès et la position arrière.

La mobilité du siège 4 entre les positions avant et arrière sert à adapter la position du siège 4 à la taille de l'utilisateur. A cet effet, le mécanisme de guidage 2 comporte un dispositif de blocage qui permet de bloquer de manière sélective le coulisseau 10 dans la coulisse 8 lorsque le coulisseau 10 se trouve entre ses positions avant et arrière. Ce dispositif n'est pas représenté étant donné qu'il est connu en soi.

Par ailleurs, un profilé tubulaire 11 solidaire de la coulisse 8 s'étend le long de celle-ci.

Le mécanisme 2 comprend également des moyens de rappel du coulisseau 10 par rapport à la coulisse 8, sous forme d'un câble élastique 12 (voir Figure 2) du type « SANDOW ® ». Ce câble élastique 12 est adapté pour solliciter le coulisseau 10 par une force de traction vers la position arrière du siège 4 lorsque le coulisseau 10 se trouve entre les positions avant et arrière.

A cet effet, le câble élastique 12 est muni d'une première extrémité 14, qui est fixée à demeure à la coulisse 8 par l'intermédiaire du profilé 11, et une seconde extrémité 16, qui est reliée au coulisseau 10.

Le mécanisme 2 comprend en outre des moyens d'inhibition 20, adaptés pour inhiber l'action du câble élastique 12 sur le coulisseau 10 lorsque ce dernier se trouve entre la position avant et la position d'accès. A cet effet, les moyens d'inhibition 20 comprennent une pièce de guidage 22, qui est fixée solidairement à la seconde extrémité 16, un crochet de rappel 24, qui est articulé à la pièce de guidage 22 autour d'un axe X-X s'étendant perpendiculairement à la direction de coulissement C, ainsi qu'une fente 26 ménagée dans une ferrure 28 solidaire du coulisseau 10 par l'intermédiaire du siège 4.

La pièce de guidage 22 est un manchon cylindrique 22A muni de brides 22B qui est guidé en coulissement suivant la direction C dans le profilé 11. Le crochet de rappel 24 est mobile sur la pièce de guidage 22 entre une position de rappel représentée sur les Figures, dans laquelle il s'engage dans la fente 26, et une position de libération, dans laquelle il est décalé autour de l'axe X-X de sorte à dégager la fente 26.

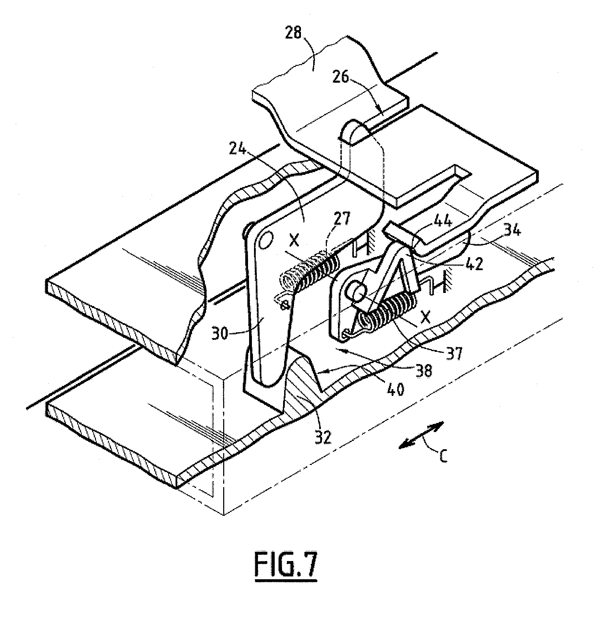

Le crochet de rappel 24 est sollicité vers sa position de rappel par un premier ressort 27 accroché à la pièce 22 (voir Figure 7).

Le mécanisme 2 comporte en outre des moyens de déclenchement automatique des moyens d'inhibition 20, lorsque le coulisseau 10 a franchi la position avant vers la position d'accès et a atteint une position de déclenchement située à proximité de la position avant, mais entre cette position et la position d'accès. Ces moyens de déclenchement comprennent un doigt d'actionnement 30 solidaire du crochet 24 (voir Figure 7), et un premier nez d'actionnement 32 solidaire du profilé tubulaire 11. Ce doigt 30 et ce nez 32 sont disposés de telle manière que le crochet de rappel 24 est basculé dans sa position de libération lorsque le coulisseau 10 est déplacé au-delà de la position avant vers la position d'accès.

Le mécanisme 2 comprend des moyens de maintien adaptés pour maintenir la pièce de guidage 22 et le câble 12 dans leur configuration prise lorsque le siège 4 franchit la position avant vers la position d'accès et atteint une position de maintien située entre la position avant et la position de déclenchement.

Ces moyens de maintien comprennent un crochet de maintien 34 qui est articulé sur la pièce de guidage 22 autour de l'axe X-X, et qui est adapté pour s'enclencher dans une ouverture 36 ménagée dans le profilé tubulaire 11, lorsque le siège 4 franchit sa position avant vers la position d'accès (voir Figures 1 et 5) et atteint la position de maintien. Ce crochet de maintien 34 est mobile entre une position d'enclenchement dans l'ouverture 36 et une position de désenclenchement dans laquelle il s'étend en dehors de cette ouverture 36.

Le mécanisme 2 comprend en outre des moyens 38 adaptés pour faire cesser l'inhibition des moyens 20 de manière automatique lorsque le coulisseau 10 franchit la position avant vers la position arrière. Ces moyens 38 comprennent une première rampe 40 qui est disposée sur le nez 32, qui est dirigée vers l'avant du véhicule, et qui est adaptée pour amener le crochet de rappel 24 par une action sur le doigt d'actionnement 30 dans sa position de libération, de telle sorte que la ferrure 28 puisse franchir le crochet 24, puis d'amener le crochet 24 de nouveau dans sa position de rappel, ainsi enclenchant le crochet 24 dans la fente 26.

Plus exactement, la rampe 40 et le doigt d'actionnement 30 sont conçus de telle sorte que le crochet de rappel 24 est enclenché lorsque le siège 4 atteint la position de déclenchement.

Les moyens 38 comprennent en outre un second nez 42, solidaire du crochet de maintien 34, ainsi qu'une rampe 44 qui est disposée sur la ferrure 28 et qui est adaptée pour pousser le crochet de maintien 34 hors de l'ouverture 36 lorsque le siège 4 a atteint sa position de maintien lors d'un déplacement de celui-ci vers sa position arrière. Ainsi, le nez 42 et la rampe 44 sont disposés de telle manière qu'ils ne font basculer le crochet 34 que lorsque le crochet de rappel est déjà engagé dans la fente 26.

Le mécanisme 2 selon l'invention fonctionne de la façon suivante.

Lorsqu'un passager souhaite utiliser le siège 4, il actionne le dispositif de blocage non représenté, et peut alors faire coulisser le siège 4 entre ses positions arrière et avant. Lors de ce déplacement, le siège 4 est, de manière permanente, sollicité élastiquement vers sa position arrière, par l'intermédiaire du câble élastique 12, de la pièce de guidage 22, du crochet 24 ainsi que de la fente 26.

Grâce au câble élastique 12, le siège 4 est sollicité vers la position arrière, ce qui augmente l'ergonomie du déplacement du siège.

Lorsque l'utilisateur souhaite accéder à des sièges qui sont situés derrière le siège 4, il actionne une commande d'accès aux places arrière qui n'est pas représentée, ce qui permet au dossier du siège 4 de s'incliner, et ce qui déverrouille simultanément le dispositif de blocage non représenté. Ainsi, le coulisseau 10 peut se déplacer dans la coulisse 8. Ensuite, l'utilisateur pousse le siège 4 vers l'avant.

Lorsque le coulisseau 10 franchit la position avant, le crochet de maintien 34 s'engage à partir de la position de maintien dans l'ouverture 36 ainsi verrouillant la pièce de guidage 22 dans sa position correspondante à la position avant. Lorsque le déplacement du siège 4 est poursuivi jusqu'à la position de déclenchement, le doigt 30 s'applique contre le nez 32, et fait basculer le crochet 24 dans sa position de libération.

Ainsi, le siège 4 et le coulisseau 10 sont libres de se déplacer entre la position avant et la position d'accès aux places arrière sans être sollicités par le câble 12. Cette configuration est représentée sur la Figure 5.

Lorsque l'utilisateur a pris place sur les sièges arrière, il déplace le siège 4 vers l'arrière. Lorsque le siège 4 franchit la position de déclenchement, la rampe 40 et le doigt 30 font basculer temporairement le crochet de rappel 24 dans sa position de libération, le crochet 24 franchit la ferrure 28, et s'enclenche dans la fente 26.

Lors d'une poursuite du déplacement du siège 4 vers l'arrière, la rampe 44 s'applique contre le nez 42, et fait basculer le crochet de maintien 34 dans sa position de désenclenchement. A partir de cette position qui est la position de maintien, le câble 12 sollicite de nouveau le siège 4 vers la position arrière.

Il est à noter que les distances entre la position avant, la position de maintien et la position de déclenchement sont très faibles et sont juste suffisamment grandes pour permettre un maintien sûr de la pièce 22 avant la libération de celle-ci du coulisseau 10.

Le mécanisme 2 selon l'invention conduit à une bonne ergonomie d'utilisation, étant donné que d'une part, entre les positions arrière et avant, le siège 4 est rappelé d'une manière définie vers sa position arrière, et d'autre part, lorsque le siège 4 est déplacé entre ses positions avant et d'accès aux places arrière, il peut être déplacé librement et avec peu d'effort.

De plus, la solidarisation du coulisseau 10 au câble élastique 12, et la désolidarisation est effectuée d'une manière automatique et ne nécessite pas d'action supplémentaire de l'utilisateur.

Par ailleurs, le mécanisme utilise exclusivement des composants mécaniques et ne consomme pas d'énergie électrique lors de l'utilisation.

L'invention peut s'appliquer également aux sièges avant de véhicule du type à trois portes.

## Revendications

1. Mécanisme de guidage d'un siège pour véhicule automobile, du type comprenant
- une coulisse (8) destinée à être fixée à la structure du véhicule (6),
- un coulisseau (10) destiné à être fixé au siège (4) et mobile en coulissement par rapport à la coulisse (8) entre une position avant du siège et une position arrière du siège,
- des moyens de rappel (12) du coulisseau (10) par rapport à la coulisse (8),
les moyens de rappel (12) sont adaptés pour solliciter le coulisseau (10) vers la position arrière du siège, lorsque le coulisseau (10) se trouve entre les positions avant et arrière du siège,
**caractérisé en ce que** le coulisseau (10) est mobile en coulissement entre la position avant du siège et une position d'accès à des places arrières du siège, la position avant étant située entre la position d'accès et la position arrière, et **en ce que** le mécanisme comprend des moyens d'inhibition (20) adaptés pour inhiber les moyens de rappel (12) exclusivement lorsque le coulisseau (10) se trouve entre la position avant et la position d'accès.

2. Mécanisme suivant la revendication 2, **caractérisé en ce que** les moyens d'inhibition (20) sont adaptés pour inhiber les moyens de rappel (12) de manière automatique lorsque le coulisseau (10) franchit la position avant vers la position d'accès.

3. Mécanisme suivant la revendications 2 ou 3, **caractérisé en ce que** les moyens d'inhibition (20) comprennent des moyens (38) adaptés pour faire cesser l'inhibition de manière automatique lorsque le coulisseau (10) franchit la position avant vers la position arrière.

4. Mécanisme suivant l'une quelconque des revendications 2 à 4, **caractérisé en ce que** les moyens d'inhibition (20) comprennent des moyens de libération (24, 26) adaptés pour libérer les moyens de rappel (12) de la coulisse (8) ou du coulisseau (10).

5. Mécanisme suivant l'une quelconque des revendications précédentes, **caractérisé en ce que** les moyens de rappel comprennent un organe élastique, notamment un câble élastique (12).

6. Mécanisme suivant les revendications 5 et 6 prises ensemble, **caractérisé en ce que** l'organe élastique (12) comprend une première extrémité (14), fixée à demeure par rapport à la coulisse (8), et une seconde extrémité (16) reliée au coulisseau (10) par l'intermédiaire des moyens de libération (24, 26).

7. Mécanisme suivant la revendication 2 ou l'une des revendications dépendantes de la revendication 2, **caractérisé en ce qu'**il comprend des moyens de maintien (34, 36) adaptés pour maintenir les moyens de rappel (12) dans une configuration qui correspond à leur configuration de la position avant du coulisseau (10), lorsque le coulisseau (10) se trouve entre la position avant et la position d'accès.

8. Mécanisme suivant la revendication 8, **caractérisé en ce que** les moyens de maintien comprennent un crochet de retenue (34) disposé sur l'un des éléments coulisseau (10) ou moyen de rappel (12) et un évidement correspondant (36) disposé sur l'autre des éléments coulisseau (10) ou moyens de rappel (12) .

9. Véhicule automobile, du type comprenant au moins un siège mobile entre une position avant et une position arrière, **caractérisé en ce que** le siège est relié à la structure du véhicule au moyen d'un mécanisme selon l'une quelconque des revendications précédentes.
